# EUROPÄISCHE PATENTANMELDUNG

(11) **EP 1 100 181 A2**
(43) Veröffentlichungstag der Anmeldung: **16.05.2001**
(21) Anmeldenummer: 00123633.0
(22) Anmeldetag: 30.10.2000
(51) Int. Cl.: H02K 5/14

(54) **Einrichtung zum Anschluss eines zum Einsatz in einem Kraftstoffbehälter vorgesehen Elektromotors**

(30) Priorität: 12.11.1999 DE 19954733
(71) Anmelder: Mannesmann VDO Aktiengesellschaft, 60388 Frankfurt am Main (DE)
(72) Erfinder: Warnke, Wolfgang, 37293 Herleshausen (DE); Mühlhausen, Ralf, 36199 Rotenburg (DE)
(74) Vertreter: Rassler, Andrea, Dipl.-Phys.

(57) **Zusammenfassung**

Eine Einrichtung (8) zum Anschluß eines Elektromotors hat eine aus nichtrostendem Edelstahl gefertigte elektrische Leitung (12). Diese Leitung (12) verbindet den Elektromotor mit dem Pluspol eines Stromnetzes. Die aus Edelstahl gefertigte elektrische Leitung (12) hat eine hohe Korrosionsbeständigkeit. Damit läßt sich der Elektromotor in einem Kraftstoffbehälter zum Antrieb einer Kraftstoffpumpe einsetzen.

## Beschreibung

Die Erfindung betrifft eine Einrichtung zum Anschluß eines zum Einsatz in einem Kraftstoffbehälter insbesondere eines Kraftfahrzeuges vorgesehenen Elektromotors mit Anschlußkontakten, mit über einen Läufer eines Rotors gleitenden Bürsten und mit flexibel gestalteten, zwischen den Anschlußkontakten und den Bürsten angeordneten elektrischen Leitungen.

Solche Einrichtungen werden meist zusammen mit den Bürsten als bauliche Einheit gefertigt und sind aus der Praxis bekannt. Der in den Kraftstoffbehälter eingesetzte Elektromotor dient dabei zum Antrieb einer Kraftstoffpumpe. Bei der aus der Praxis bekannten Einrichtung sind die Anschlußkontakte auf einem Kunststoffteil befestigt. Über die Anschlußkontakte läßt sich der Elektromotor mit einem Stromnetz des Kraftfahrzeuges verbinden. In dem Kunststoffteil ist zudem meist ein einen Kondensator sowie zwei Entstördrosseln aufweisendes Entstörteil angeordnet.

Das Kunststoffteil wird mit dem Elektromotor verbunden. Der aus dem Kunststoffteil herausgeführte Teilbereich der Leitung ist als flexible Kupferlitze gestaltet und bis zu der jeweiligen Bürste geführt. Hierdurch hat die Bürste auch bei einem Verschleiß eine Versorgung mit elektrischem Strom. Nachteilig bei der bekannten Einrichtung ist, daß die elektrische Leitung in aggressiven Medien wie beispielsweise Kraftstoff korrodiert und anschließend zerstört wird.

Man könnte daran denken, die Kupferlitze zum Schutz vor aggressiven Medien mit Kunststoff zu umspritzen. Dies führt jedoch zu einer Verringerung der Flexibilität der elektrischen Leitung und damit zu einer Einschränkung der Beweglichkeit der Bürste. Weiterhin gestaltet sich die Umspritzung sehr kostenintensiv.

Der Erfindung liegt das Problem zugrunde, eine Einrichtung der eingangs genannten Art so zu gestalten, daß sie eine besonders zuverlässige Versorgung des Elektromotors mit elektrischem Strom ermöglicht und kostengünstig herstellbar ist.

Dieses Problem wird erfindungsgemäß dadurch gelöst, daß zumindest ein Teilbereich einer zu einer der Bürsten führenden, flexibel gestalteten elektrischen Leitung aus einer nichtrostenden FE-Legierung gefertigt ist.

Durch diese Gestaltung läßt sich die elektrische Leitung flexibel gestalten. Rostfreie FE-Legierungen haben eine hohe Beständigkeit gegenüber aggressiven Bestandteilen des Kraftstoffs. Eine Umspritzung der elektrischen Leitung ist dank der Erfindung nicht erforderlich. Die Anschlußkontakte haben damit eine dauerhafte Verbindung mit den Bürsten. Der Elektromotor wird deshalb zuverlässig mit elektrischem Strom versorgt. Durch den Einsatz einer FE-Legierung läßt sich zudem die elektrische Leitung besonders kostengünstig fertigen.

Zur weiteren Verbesserung der chemischen Beständigkeit gegenüber den aggressiven Bestandteilen des Kraftstoffs trägt es gemäß einer anderen vorteilhaften Weiterbildung der Erfindung bei, wenn die FE-Legierung eine Edelstahllegierung ist.

Die elektrische Leitung könnte beispielsweise in ihrem mittleren Bereich einen flexiblen Abschnitt aus der FE-Legierung aufweisen. Der elektrische Leiter erfordert jedoch gemäß einer anderen vorteilhaften Weiterbildung der Erfindung einen besonders geringen baulichen Aufwand, wenn der aus der FE-Legierung gefertigte Teilbereich der elektrischen Leitung ein an die entsprechende Bürste angrenzender Teilbereich ist.

Ein Spannungsabfall durch eine im Vergleich zu der Kupferlitze der bekannten Einrichtung geringe Leitfähigkeit der FE-Legierung könnte durch einen besonders großen Querschnitt der Leitung ausgeglichen werden. Leitungen mit besonders großem Querschnitt lassen sich jedoch gemäß einer anderen vorteilhaften Weiterbildung der Erfindung vermeiden, wenn der aus der FE-Legierung gefertigte Teilbereich ein Teil einer zu dem Pluspol einer Stromversorgung führenden elektrischen Leitung ist. Da die Korrosion insbesondere am Pluspol auftritt, kann die zum Minuspol führende elektrische Leitung wie die der bekannten Einrichtung als Kupferlitze gestaltet sein.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: schematisch einen Elektromotor in einem Längsschnitt mit einer erfindungsgemäßen Einrichtung,
- Fig.2: eine stark vergrößerte Darstellung der erfindungsgemäßen Einrichtung.

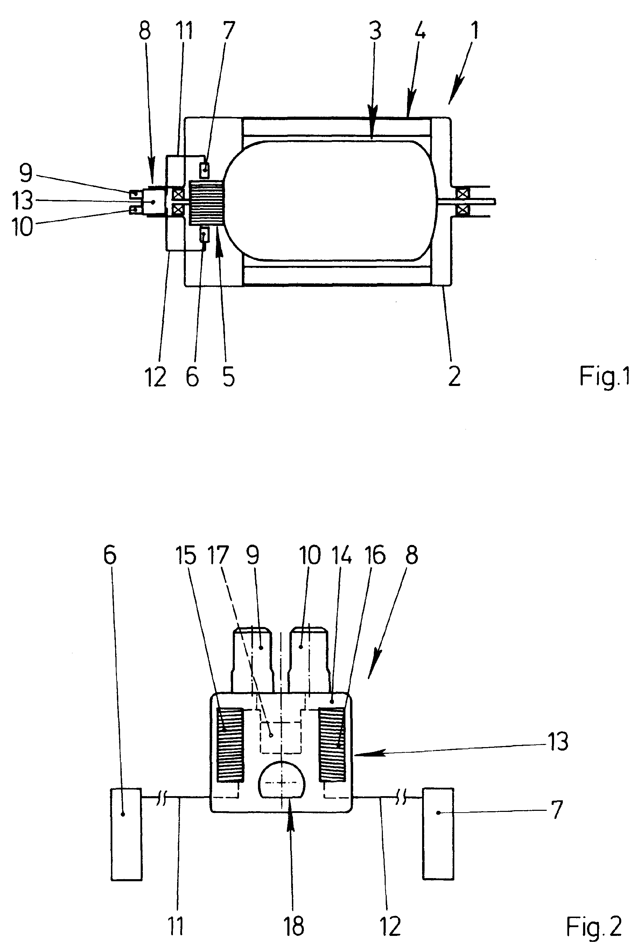

Figur 1 zeigt einen Elektromotor 1 mit einem drehbar in einem Gehäuse 2 gelagerten Rotor 3 und mit einem Stator 4. Der Rotor 3 hat zu seiner Versorgung mit elektrischem Strom einen Läufer 5, über den Kohlebürsten 6, 7 gleiten. Die Versorgung des Läufers 5 mit elektrischem Strom erfolgt über eine Einrichtung 8 mit Anschlußkontakten 9, 10 und mit Leitungen 11, 12, zwischen denen ein Entstörteil 13 angeordnet ist. Die Leitungen 11, 12 führen zu den Kohlebürsten 6, 7. An den Anschlußkontakten 9, 10 lassen sich nicht dargestellte Steckkontakte eines Stromnetzes anschließen. Dieser Elektromotor 1 ist zum Antrieb einer Kraftstoffpumpe eines Kraftfahrzeuges vorgesehen und wird mit Kraftstoff durchströmt.

Figur 2 zeigt stark vergrößert die Einrichtung 8 aus Figur 1. Die Einrichtung 8 hat ein Kunststoffteil 14 zur Halterung der Anschlußkontakte 9, 10 und jeweils einer zwischen den Anschlußkontakten 9, 10 und Leitungen 11, 12 angeordneten Drossel 15, 16. Die Anschlußkontakte 9, 10 sind untereinander mit einem Kondensator 17 verbunden. Die Drosseln 15, 16 und der Kondensator 17 bilden das Entstörteil 13. Eine der Leitungen 11 ist als Kupferlitze gestaltet. Diese Leitung 11 verbindet den in Figur 1 dargestellten Elektromotor 1 mit dem Minuspol eines Stromnetzes. Die andere Leitung 12 ist aus Edelstahl gefertigt und verbindet den Elektromotor 1 mit dem Pluspol. Beide elektrischen Leitungen 11, 12 sind flexibel gestaltet und bestehen aus einem Bündel von einzelnen Leitungen mit einem besonders geringen Querschnitt, so daß sie sich bei einem Verschleiß der Bürsten 6, 7 mitbewegen und die Stromversorgung des in Figur 1 dargestellten Elektromotors 1 zuverlässig sicherstellen. Weiterhin zeigt Figur 2, daß das Kunststoffteil 14 eine Ausnehmung 18 für ein nicht dargestelltes Befestigungselement zur Befestigung der Einrichtung 8 an den in Figur 1 dargestellten Elektromotor 1 hat.

## Patentansprüche

1. Einrichtung zum Anschluß eines zum Einsatz in einem Kraftstoffbehälter insbesondere eines Kraftfahrzeuges vorgesehenen Elektromotors mit Anschlußkontakten, mit über einen Läufer eines Rotors gleitenden Bürsten und mit flexibel gestalteten, zwischen den Anschlußkontakten und den Bürsten angeordneten elektrischen Leitungen, **dadurch gekennzeichnet,** daß zumindest ein Teilbereich einer zu einer der Bürsten (6, 7) führenden, flexibel gestalteten elektrischen Leitung (11, 12) aus einer nichtrostenden FE-Legierung gefertigt ist.

2. Einrichtung nach Anspruch 1, **dadurch gekennzeichnet,** daß die FE-Legierung eine Edelstahllegierung ist.

3. Einrichtung nach Anspruch 1 oder 2, **dadurch gekennzeichnet**, daß der aus der FE-Legierung gefertigte Teilbereich der elektrischen Leitung (11, 12) ein an die entsprechende Bürste (6, 7) angrenzender Teilbereich ist.

4. Einrichtung nach zumindest einem der vorhergehenden Ansprüche, **dadurch gekennzeichnet,** daß der aus der FE-Legierung gefertigte Teilbereich ein Teil einer zu dem Pluspol einer Stromversorgung führenden elektrischen Leitung (12) ist.
